# EUROPEAN PATENT APPLICATION

(11) **EP 4 198 522 A1**
(43) Date of publication of application: **21.06.2023**
(21) Application number: 22214582.3
(22) Date of filing: 19.12.2022
(51) Int. Cl.: G01P 5/24

(54) **WAVE GENERATOR FOR ULTRASONIC AIR DATA SYSTEMS**

(30) Priority: 20.12.2021 US 202163291543 P
(71) Applicant: ROSEMOUNT AEROSPACE INC., Burnsville, MN 55306-4898 (US)
(72) Inventor: SHANNON, Daniel, Glastonbury, CT (US); KIM, Jeong-Woo, Glastonbury, CT (US)
(74) Representative: Dehns

(57) **Abstract**

A wave generator (12) for an ultrasonic air data system can be configured to collect data derived from a flow of air in a downstream direction. The wave generator can include an ultrasonic wave source (24) configured to output ultrasonic waves from a first end and a wave shaper (26) connected to the first end of the ultrasonic wave source. The wave shaper can be configured to focus the ultrasonic waves into an area downstream from the ultrasonic wave source bounded by a first plane parallel to the downstream direction and a second plane orthogonal to the first plane.

## Description

### FIELD OF THE INVENTION

This disclosure relates generally to ultrasonic/acoustic air data systems and, more particularly, to wave generators that focus ultrasonic waves in a particular direction.

### BACKGROUND

Vehicles such as modern aircraft often incorporate air data systems that calculate air data outputs based on measured parameters collected from various sensors positioned about the aircraft. For instance, many air data systems utilize air data probes that measure parameters of oncoming airflow about the aircraft exterior to generate aircraft air data outputs, such as angle of attack (i.e., an angle between the oncoming airflow or relative wind and a reference line of the aircraft, such as a chord of a wing of the aircraft), calibrated airspeed, Mach number, altitude, or other air data parameters. One challenge faced by air data systems in using ultrasonic waves to measure parameters of oncoming airflow is that the propagation of the waves can be inconsistent due to reflections of the waves, which may cause the waves to be weak in one direction and strong in another direction. This inconsistency of wave propagation can lead to inaccuracies in the measured parameters.

### SUMMARY

A wave generator for an ultrasonic air data system can be configured to collect data derived from a flow of air in a downstream direction. The wave generator can include an ultrasonic wave source configured to output ultrasonic waves from a first end and a wave shaper connected to the first end of the ultrasonic wave source. The wave shaper can be configured to focus the ultrasonic waves into an area downstream from the ultrasonic wave source bounded by a first plane parallel to the downstream direction and a second plane orthogonal to the first plane.

An ultrasonic air data system for measuring air data of air flowing along a vehicle in motion includes a wave generator having an ultrasonic wave source configured to output ultrasonic waves and a wave shaper connected to the ultrasonic wave source with the wave shaper configured to direct the ultrasonic waves in a downstream direction from the ultrasonic wave source and at least one wave receiver downstream from the wave generator and configured to measure the ultrasonic waves output by the wave generator.

### BRIEF DESCRIPTION OF THE DRAWINGS

FIG. 1 is a plan view of an ultrasonic air data system configuration.
FIG. 2A is prospective view of a wave generator having a wave shaper.
FIG. 2B is an elevation view of the wave generator propagating ultrasonic waves in an area between a first plane and a second plane.
FIG. 2C is a plan view of the wave generator propagating ultrasonic waves in an area parallel to the first plane.

### DETAILED DESCRIPTION

In one example, an ultrasonic air data system that is configured to collect data derived from a flow of air in a downstream direction. The ultrasonic air data system includes a wave generator that has a wave shaper that focuses ultrasonic waves into an area downstream from the wave shaper bounded by a first plane parallel to the downstream direction and as second plan orthogonal to the first plane. The area into which the waves are focused is a 180-degree array bounded by the second plane (which extends outward from the wave generator) and a 90-degree array bounded by the first plane and the second plane. Thus, the ultrasonic waves extend outward from the wave generator in a quarter-sphere shape (when not influenced by the flow of air in the downstream direction). The wave shaper focuses the waves so as to be received and measured by at least one wave receiver. More specifically, the wave shaper focuses the waves in the downstream direction (i.e. corresponding to air flowing around/along a vehicle in motion, e.g., an aircraft) such that the flowing air affects/bends the ultrasonic waves. The affected waves are collected and measured by the wave receiver to determine the air data outputs/parameters, such as angle of attack (i.e., an angle between the oncoming airflow or relative wind and a reference line of the aircraft, such as a chord of a wing of the aircraft), calibrated airspeed, Mach number, altitude, or other air data parameters.

To focus the waves in the downstream direction to better interact with the flowing air and to form mores steady and consistent waves, the wave shaper can have a hollow horn with a circular cross-sectional shape at a first end connected to the ultrasonic wave source that transitions to a smile cross-sectional shape at a second end distant from the first end. The hollow horn channels the ultrasonic waves from the ultrasonic wave source outwards into the airflow and focuses the waves by reducing the reflection of waves within the wave shaper, which can cause inconsistencies in the amplitude of the waves when the waves combine in phase (to increase the amplitude) or out of phase (to decrease the amplitude). The more consistent waves result in increased consistency in air data outputs because the changes in the waves measured/collected by the wave receiver are influenced by the air flow and not by other means.

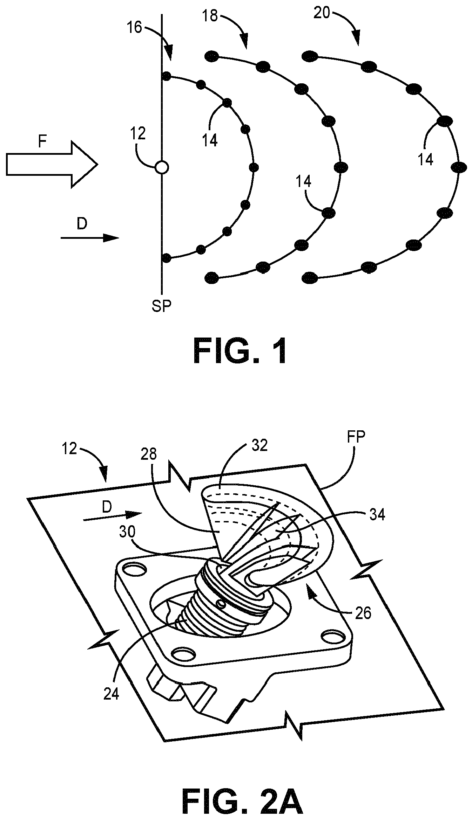

FIG. 1 is a plan view of ultrasonic air data system 10. Ultrasonic air data system 10 includes wave generator 12 and wave receivers 14 arranged into first set of receivers 16, second set of receivers 18, and third set of receivers 20 in a downstream direction D from wave generator 12. Downstream direction D is defined with respect to flow F of air passing over/through ultrasonic air data system 10. FIG. 1 is a view that looks down onto first plane FP, which is seen more easily in FIGS. 2A-2C, with second plane SP extending out from the page in a direction orthogonal to first plane FP.

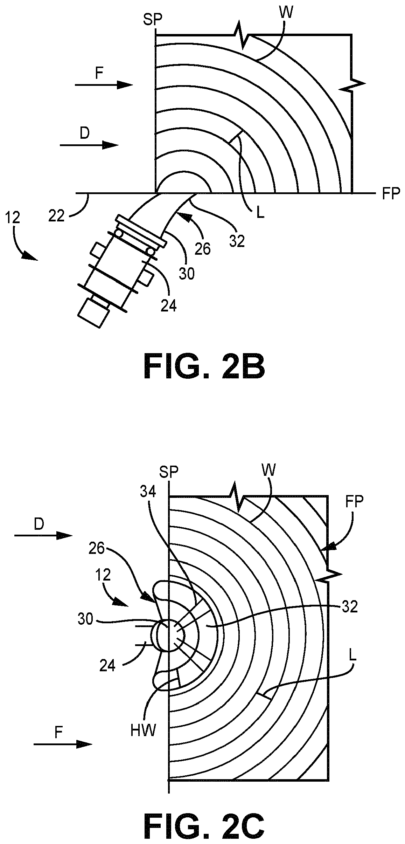

Air data system 10 can be located and oriented in any direction. For example, air data system 10 can be located on an outer surface of a vehicle configured to be in motion (shown as outer surface 22 in FIG. 2B), such as an aircraft, with air flowing passed air data system 10. In FIG. 1, air data system 10 is oriented with respect to flow F of air with wave generator 12 being positioned at an upstream-most position and wave receivers 14 being downstream from wave generator 12 to collect/measure the waves output by wave generator 12 and affected by flow F of air. The components of air data system 10 can be embedded in the outer surface of the vehicle (i.e., flush with the outer surface) so as to not disrupt flow F that is used by air data system 10 to determine the air data outputs/parameters.

Wave generator 12 is configured to output ultrasonic waves, and can focus those waves into an area in a downstream direction D generally defined by the directions between second plane SP (i.e., out of the page) and first plane FP (a 90-degree array shown in FIG. 2B) and between an upward line in FIG. 1 defining a portion of second plane SP and a downward line in FIG. 1 defining another portion of second plane SP (a 180-degree array shown in FIG. 2C). The focusing of the ultrasonic waves towards this area allows for flow F to influence the waves while also allowing the waves to be collected/measured by wave receivers 14. Ultrasonic waves directed in the upstream direction (i.e. opposite to downstream direction D) are less likely to be able to be collected/measured by wave receivers 14, and the influence of flow F on those waves may not be easily determined by air data system 10. Thus, air data system 10 focuses the ultrasonic waves into an area downstream D from wave generator 12.

Wave receivers 14 can include only one wave receiver 14 positioned in an area downstream D from wave generator 12, or wave receivers 14 can include multiple wave receivers 14 arranged and/or oriented in any configuration suitable for collecting/measuring the ultrasonic waves and the influence of flow F on the ultrasonic waves propagated by wave generator 12. Wave receivers 14 can be arranged in sets of receivers 16, 18, and 20 of varying distances from wave generator 12 to measure/collect the ultrasonic waves that are propagated outward from wave generator 12 in a semi-circular pattern (see waves in FIG. 2C). As the ultrasonic waves move further from wave generator 12, the waves spend more time in flow F and are more affected by flow F, thus causing the waves to bend. Thus, in some embodiments, sets of wave receivers 18 and 20 may be arranged not in a perfect semi-circle but instead in an elongated or flattened semi-circle. Wave receivers 14 can be arranged in other configurations and can includes more or less sets/rows of receivers than that which is shown in FIG. 1 depending on a variety of factors, such as the configuration of the vehicle and air data system 10 and the collection/measurement of the ultrasonic waves.

FIG. 2A is a perspective view of wave generator 12 embedded in outer surface 22 of the vehicle, FIG. 2B is an elevation view of wave generator 12 propagating ultrasonic waves W in the area between first plane FP and second plane SP, and FIG. 2C is a plan view of wave generator 12 propagating ultrasonic waves W downstream D from second plane SP. Wave generator 12 of ultrasonic air data system 10 can be embedded in outer surface 22 of the vehicle and includes ultrasonic wave source 24 and wave shaper 26. Wave shaper 26 can include hollow horn 28 that has first end 30 with a circular cross-sectional shape and second end 32 with a smile cross-sectional shape (i.e., a semi-annular shape). Hollow horn 28 is shown as transparent in FIG. 2A so that the internal components of hollow horn 28 are viewable. Hollow horn 28 can also include splitters 34 that extend within hollow horn 28. Second end 32 has a horn width HW. Ultrasonic waves W have wavelength L that can vary but, for waves W to remain in the ultrasonic range, must be no greater than approximately 1.9 centimeters (0.75 inches). However, if desired, waves W can have a wavelength L that is outside ultrasonic range.

Wave generator 12 can be embedded in outer surface 22 of the vehicle such that second end 32 of wave shaper 32 is flush with outer surface 22 so as to not disturb flow F of air along outer surface 22. Outer surface 22 can be parallel and coplanar with first plane FP to form a boundary layer for flow F. Wave generator 12 can have any configuration suitable for creating and focusing ultrasonic waves W. While detailed in this disclosure as being ultrasonic waves W, the waves can have any amplitude, frequency, and/or wavelength suitable for determining the air data outputs (e.g., the characteristics of vehicle movement and/or flow F of air). Wave generator 12 (or individual components of wave generator 12, such as ultrasonic wave source 24 and/or wave shaper 26) can be angled towards downstream direction D as shown in FIGS 2A and 2B. The angle can be, for example, approximately sixty degrees as measured from first plane FP/outer surface 22 (e.g., thirty degrees as measured from second plane SP). Other configurations of wave generator 12 can be angled at other degrees, such as being angled between fifteen and seventy-five degrees as measured from first plane FP/outer surface 22. In another example, wave generator 12 is not angled and instead extends along second plane SP orthogonal to the direction of flow F and downstream direction D (e.g., ninety degrees as measured from first plane FP/outer surface 22).

Wave generator 12 includes ultrasonic wave source 24 configured to output ultrasonic waves W from first end 30. Ultrasonic wave source 24 can be any component suitable for created and outputting ultrasonic waves W and can be configured to vary waves W either in intensity, amplitude, wavelength, frequency, or other characteristics. For example, ultrasonic wave source 24 can output waves W having wavelength L. Ultrasonic wave source 24 can be connected to a power source, can be battery operated, or can be powered another way. While shown as having a cylindrical shape, ultrasonic wave source 24 can be any shape, size, configuration, and/or orientation for creating/outputting waves W. Additionally, ultrasonic wave source 24 can have a width that is greater than wavelength L of each ultrasonic wave W, or ultrasonic wave source 24 can have another width suitable for creating any other type of acoustic wave.

Wave shaper 26 is connected to ultrasonic wave source 24 at first end 30 and is configured to focus and reduce reflections of ultrasonic waves W output by ultrasonic wave source 24. Wave shaper 26 focuses waves W at the area in downstream direction D from wave shaper 26 and defined by the following boundaries: waves W extend into the area in a 180-degree array bounded by second plane SP (seen most easily in FIG. 2B) and a 90-degree array bounded by first plane FP and second plane SP (seen most easily in FIG. 2C) such that ultrasonic waves W extend outward from wave shaper 26 in a quarter-sphere shape. Thus, ultrasonic waves W extend outward from wave shaper 26 in a quarter-spherical shape due to the general spherical propagation of waves W (without the influence of flow F).

When under the influence of flow F, waves W will be bent by flow F of air in downstream direction D. The bending of waves W is collected/measured by wave receivers 14 to determine/derive aircraft air data outputs/parameters.

Wave shaper 26 channels waves W (which enter wave shaper 26 from ultrasonic wave source 24) from first end 30 adjacent ultrasonic wave source 24 out second end 32 into flow F. Wave shaper 26 can have a variety of shapes, sizes, configurations, and orientations to focus waves W and reduce reflections of waves W. In one example, wave shaper 26 includes hollow horn 28.

Hollow horn 28 is one example configuration of wave shaper 26 and is shaped to focus the ultrasonic waves in downstream direction D in the area between first plane FP and second plane SP. Hollow horn 28 can have a circular cross-sectional shape at first end 30 that connects to ultrasonic wave source 24. The circular cross-sectional shape at first end 30 can transition to a smile cross-sectional shape (e.g., a semi-annular shape that arcs 180 degrees) at second end 32 distant from first end 30 and ultrasonic wave source 24. Second end 32 of hollow horn 28 can be angled so as to be parallel to and flush with first plane FP and outer surface 22 (as shown in FIG. 2B). Second end 32 of hollow horn 28 can have a horn width HW (i.e., a width of the smile cross-sectional shape) that is no greater than the maximum wavelength L of ultrasonic waves W, which is approximately 1.9 centimeters (0.75 inches). Other configurations of hollow horn 28 can have a second end 32 with another width, such as a width that is equal to or greater than wavelength L. However, hollow horn 28 should be sized, shaped, configured, and/or oriented to propagate ultrasonic waves W of consistent amplitude, frequency, etc. for consistent collection/measurement of data regarding the bending of waves W by flow F.

Within hollow horn 28 can be one or multiple splitters 34, which can extend from first end 30 to second end 32. Splitters 34 can be configured to minimize reflection of ultrasonic waves W within hollow horn 28 by directing waves W out second end 32. Splitters 34 can extend straight from first end 30 to second end 32 or can be curved, stair-stepped, or another configuration. Additionally, splitters 34 can extend only a portion of the distance between first end 30 and second end 32. As shown in FIGS. 2A and 2C, splitters 34 can be arranged in pairs such that each pair consists of two splitters 34 that are closer to each other than to any other splitters 34. Arranging splitters 34 in pairs may further reduce reflection of waves W within hollow horn 28. While shown as having four splitters 34 in FIGS. 2A and 2C, hollow horn 28 can have other configurations with no splitters 34, less than four splitter 34, or more than four splitters 34. Splitters 34 can have other arrangements, such as being equidistant from adjacent splitters 34 or arranged in triples, quads, etc. Additionally, splitters 34 can have any width and can extend entirely across hollow horn 28 (span the entire horn width HW) or extend only a portion of the way across hollow horn 28. Hollow horn 28 and splitters 34 can have other configurations that are suitable for focusing waves W and/or reducing reflection of waves W.

As described above, wave generator 12 with ultrasonic wave source 24 and wave shaper 26 is configured to produce consistent ultrasonic waves W focused in an area downstream D from wave generator 12 so as to be collected/measured by wave receivers 14. The configuration of wave generator 12 provides for consistent and accurate collection and determination of the air data outputs/parameters, such as angle of attack (i.e., an angle between the oncoming airflow or relative wind and a reference line of the aircraft, such as a chord of a wing of the aircraft), calibrated airspeed, Mach number, altitude, or other air data parameters.

### Discussion of Possible Embodiments

The following are non-exclusive descriptions of possible embodiments of the present invention.

A wave generator for an ultrasonic air data system can be configured to collect data derived from a flow of air in a downstream direction. The wave generator can include an ultrasonic wave source configured to output ultrasonic waves from a first end and a wave shaper connected to the first end of the ultrasonic wave source. The wave shaper can be configured to focus the ultrasonic waves into an area downstream from the ultrasonic wave source bounded by a first plane parallel to the downstream direction and a second plane orthogonal to the first plane.

The wave generator of the preceding paragraph can optionally include, additionally and/or alternatively, any one or more of the following features, configurations, and/or additional components:

The wave shaper is configured to focus the ultrasonic waves into the area in a 180-degree array bounded by the second plane and a 90-degree array bounded by the first plane and the second plane such that the ultrasonic waves extend outward from the wave shaper in a quarter-sphere shape.

The ultrasonic wave source is angled with respect to the first plane.

The wave shaper further includes a hollow horn configured to focus the ultrasonic waves, the hollow horn having a circular cross-sectional shape at the first end that is affixed to the ultrasonic wave source and a smile cross-sectional shape at a second end distant from the first end.

The wave shaper further includes at least one splitter extending within the hollow horn from the first end to the second end, the at least one splitter being configured to minimize reflection of the ultrasonic waves within the hollow horn.

The at least one splitter includes four splitters.

The four splitters are arranged in pairs such that each pair consists of two spitters that are closer to each other than to any other splitters.

The width of the smile cross-sectional shape at the second end of the hollow horn is no greater than approximately 1.9 centimeters (0.75 inches).

The smile cross-sectional shape at the second end extends 180 degrees along the first plane to form a semi-annular shape.

A wavelength of each ultrasonic wave is shorter than a width of the ultrasonic wave source.

An ultrasonic air data system for measuring air data of air flowing along a vehicle in motion includes a wave generator having an ultrasonic wave source configured to output ultrasonic waves and a wave shaper connected to the ultrasonic wave source with the wave shaper configured to direct the ultrasonic waves in a downstream direction from the ultrasonic wave source and at least one wave receiver downstream from the wave generator and configured to measure the ultrasonic waves output by the wave generator.

The ultrasonic air data system of the preceding paragraph can optionally include, additionally and/or alternatively, any one or more of the following features, configurations, and/or additional components:

The wave generator is located along a first plane parallel to an outer surface of the vehicle and the wave shaper is configured to focus the ultrasonic waves into the area downstream from the wave shaper in a 90-degree array bounded by the first plane and a second plane orthogonal to the first plane extending outward from the wave shaper and a 180-degree array bounded by the second plane.

The at least one wave receiver includes a first set of receivers arranged in a first row having a semicircular shape downstream from the wave generator.

The at least one wave receiver further includes a second set of receivers arranged in a second row downstream from the first row.

The wave shaper further includes a hollow horn configured to direct the ultrasonic waves towards the at least one wave receiver, the hollow horn having a smile cross-sectional at a second end distal from the ultrasonic wave source.

The second end of the hollow horn distal from the ultrasonic wave source is flush with a first plane parallel to an outer surface of the vehicle.

The wave shaper further includes at least one splitter extending away from the ultrasonic wave source within the hollow horn with the splitter being configured to minimize reflection of the ultrasonic waves within the hollow horn.

The at least one splitter includes four splitters.

The at least one wave receiver is located on an outer surface of the vehicle in motion.

The vehicle is an aircraft and the ultrasonic waves collected by the at least one wave receiver are indicative of movement of the aircraft.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A wave generator (12) for an ultrasonic air data system (10) configured to collect data derived from a flow of air in a downstream direction, the wave generator comprising:
an ultrasonic wave source (24) configured to output ultrasonic waves from a first end; and
a wave shaper (26) connected to the first end of the ultrasonic wave source, the wave shaper configured to focus the ultrasonic waves into an area downstream from the ultrasonic wave source bounded by a first plane parallel to the downstream direction and a second plane orthogonal to the first plane.

2. The wave generator (12) of claim 1, wherein the wave shaper (26) is configured to focus the ultrasonic waves into the area in a 180-degree array bounded by the second plane and a 90-degree array bounded by the first plane and the second plane such that the ultrasonic waves extend outward from the wave shaper in a quarter-sphere shape.

3. The wave generator of claim 1 or 2, wherein the ultrasonic wave source (24) is angled with respect to the first plane.

4. The wave generator of any preceding claim, wherein the wave shaper (26) further comprises:
a hollow horn (28) configured to focus the ultrasonic waves, the hollow horn having a circular cross-sectional shape at the first end (30) that is affixed to the ultrasonic wave source (24) and a smile cross-sectional shape at a second end (32) distant from the first end.

5. The wave generator of claim 4, wherein the wave shaper (26) further comprises:
at least one splitter (34) extending within the hollow horn (28) from the first end (30) to the second end (32), the at least one splitter being configured to minimize reflection of the ultrasonic waves within the hollow horn.

6. The wave generator of claim 5, wherein the at least one splitter (34) includes four splitters optionally
wherein the four splitters (34) are arranged in pairs such that each pair consists of two spitters that are closer to each other than to any other splitters.

7. The wave generator of any of claims 4 to 7, wherein the width of the smile cross-sectional shape at the second end (32) of the hollow horn (28) is no greater than approximately 1.9 centimeters (0.75 inches); and/or
wherein the smile cross-sectional shape at the second end extends 180 degrees along the first plane to form a semi-annular shape.

8. The wave generator of any previous claim, wherein a wavelength of each ultrasonic wave is shorter than a width of the ultrasonic wave source.

9. An ultrasonic air data system (12) for measuring air data of air flowing along a vehicle in motion, the system comprising:
a wave generator (12) having an ultrasonic wave source (24) configured to output ultrasonic waves and a wave shaper (26) connected to the ultrasonic wave source with the wave shaper configured to direct the ultrasonic waves into an area in a downstream direction from the ultrasonic wave source; and
at least one wave receiver (14) downstream from the wave generator and configured to measure the ultrasonic waves output by the wave generator.

10. The system of claim 9, wherein the wave generator (24) is located along a first plane parallel to an outer surface of the vehicle and the wave shaper is configured to focus the ultrasonic waves into the area downstream from the wave shaper in a 90-degree array bounded by the first plane and a second plane orthogonal to the first plane extending outward from the wave shaper and a 180-degree array bounded by the second plane.

11. The system of claim 9 or 10, wherein the at least one wave receiver (14) includes a first set of receivers (16) arranged in a first row having a semicircular shape downstream from the wave generator; optionally
wherein the at least one wave receiver further includes a second set of receivers (18) arranged in a second row downstream from the first row.

12. The system of any of claims 9 to 11, wherein the wave shaper (26) further comprises:
a hollow horn (28) configured to direct the ultrasonic waves towards the at least one wave receiver (14), the hollow horn having a smile cross-sectional at a second end (32) distal from the ultrasonic wave source.

13. The system of claim 12, wherein the second end of the hollow horn (28) distal from the ultrasonic wave source is flush with a first plane parallel to an outer surface of the vehicle.

14. The system of claim 13, wherein the wave shaper further comprises:
at least one splitter (34) extending away from the ultrasonic wave source (24) within the hollow horn (28) with the splitter being configured to minimize reflection of the ultrasonic waves within the hollow horn; optionally
wherein the at least one splitter includes four splitters.

15. The system of any of claims 9 to 14, wherein the at least one wave receiver (14) is located on an outer surface of the vehicle in motion; and/or
wherein the vehicle is an aircraft and the ultrasonic waves collected by the at least one wave receiver are indicative of movement of the aircraft.
